# EUROPEAN PATENT APPLICATION

(11) **EP 4 804 012 A1**
(43) Date of publication of application: **09.09.2026**
(21) Application number: 26156359.7
(22) Date of filing: 04.02.2026
(51) Int. Cl.: G06F 8/36, G06F 8/73, G06F 16/3331, G06F 16/334, G06F 16/338, G06F 40/30, G06N 3/0475, G06N 3/0455

(54) **COMPUTING SYSTEM FOR CATALOGING SOFTWARE CODE VIA GENERATIVE LANGUAGE MODEL**

(30) Priority: 04.03.2025 US 202519070331
(71) Applicant: The Boeing Company, Arlington, VA 22202 (US)
(72) Inventor: DEZONNO, Anthony Joseph, Arlington, 22202 (US)
(74) Representative: Bugnion S.p.A. - US1

(57) **Abstract**

A computing system for cataloging software code is provided. The computing system comprises at least one code repository storing a plurality of code projects each having a natural language description, code project, and location. The computing system further comprises processing circuitry configured to, for each of the plurality of code projects, determine the location and a name of the code project and store the location and the name in a search table; receive a prompt from a user requesting a list of matching code projects from the plurality of code projects; generate, via at least one generative language model trained on the natural language descriptions of the plurality of code projects, and in response to the prompt, an output including the list of matching code projects; and return the output to the user.

## Description

### FIELD

The present disclosure relates generally to software programming and more particularly to code repository cataloging and searching.

### BACKGROUND

One of the most useful aspects of software programs is that they are reusable by others. Software engineers often begin a project by searching for code previously written by other programmers that performs a particular function, to serve as a building block for the current project. Many of these code examples are stored in software repositories, which may be public or proprietary to a particular organization. Currently such searching is limited to keyword searching against descriptions of the code stored in these software repositories. Many code examples in such repositories are not documented well or at all, and thus may be missed in a keyword search. Further, if a software engineer fails to search in a particular repository, any relevant software stored therein will remain undiscovered. With many such proprietary repositories available in modern companies with global operations, and with many such public repositories available via the Internet, missing a repository during a search is a real concern. Further, with the large number (by some estimates over 289 million) of code projects available via the Internet, software engineers who have particular needs can truly face a needle in the haystack problem. In practice, the odds of finding code that meets the software engineer's requirements can be unfavorably small.

### SUMMARY

To address the above issues, according to one aspect of the present disclosure, a computing system for cataloging software code is provided. The computing system comprises at least one code repository storing a plurality of code projects each having a natural language description, code, and location. The computing system further comprises processing circuitry configured to, for each of the plurality of code projects, determine the location and a name of the code project and store the location and the name in a search table; receive a prompt from a user requesting a list of matching code projects from the plurality of code projects; generate, via at least one generative language model trained on the natural language descriptions of the plurality of code projects, and in response to the prompt, an output including the list of matching code projects; and return the output to the user.

According to another aspect of the present disclosure, a method for cataloging software code is provided. The method comprises storing a plurality of code projects each having a natural language description, code project, and location in at least one code repository; for each of the plurality of code projects, determining the location and a name of the code project and storing the location and the name in a search table; receiving a prompt from a user requesting a list of matching code projects from the plurality of code projects; generating, via at least one generative language model trained on the natural language descriptions of the plurality of code projects, and in response to the prompt, an output including the list of matching code projects; and returning the output to the user.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 shows a schematic drawing of a computing system for cataloging software code, according to one example of the present disclosure.
FIG. 2 shows an example configuration for training a language model of the computing system of FIG. 1 on data from one or more code repositories.
FIG. 3 is a schematic view of the computing system of FIG. 1, at inference time.
FIG. 4 is a flow chart of a method for use in cataloging software code, according to one example of the present disclosure.
FIG. 5 is a schematic view of an example computing environment in which the computing system of FIG. 1 may be enacted.

### DETAILED DESCRIPTION

### Architecture

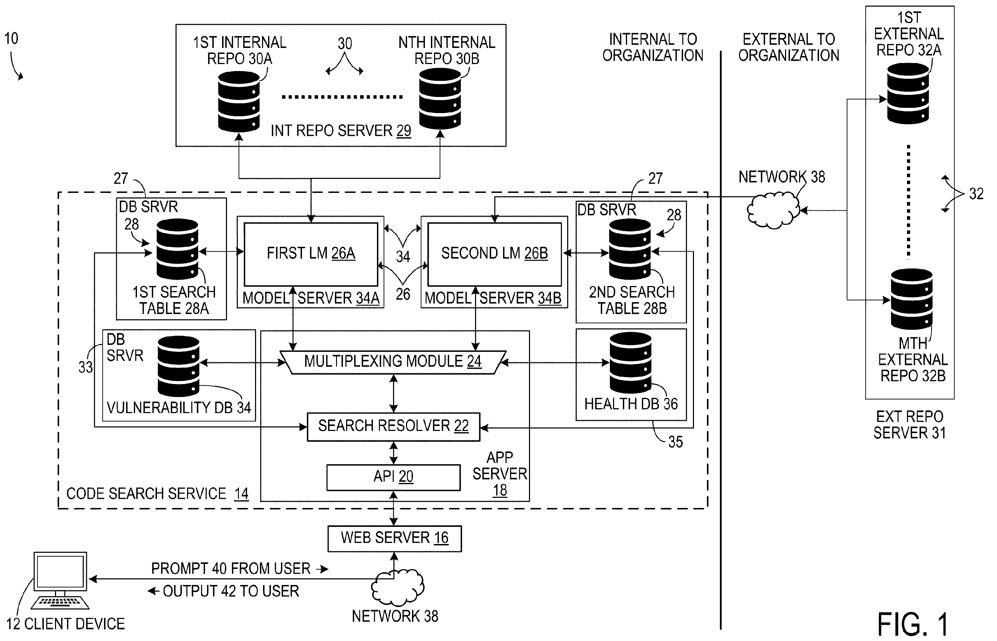

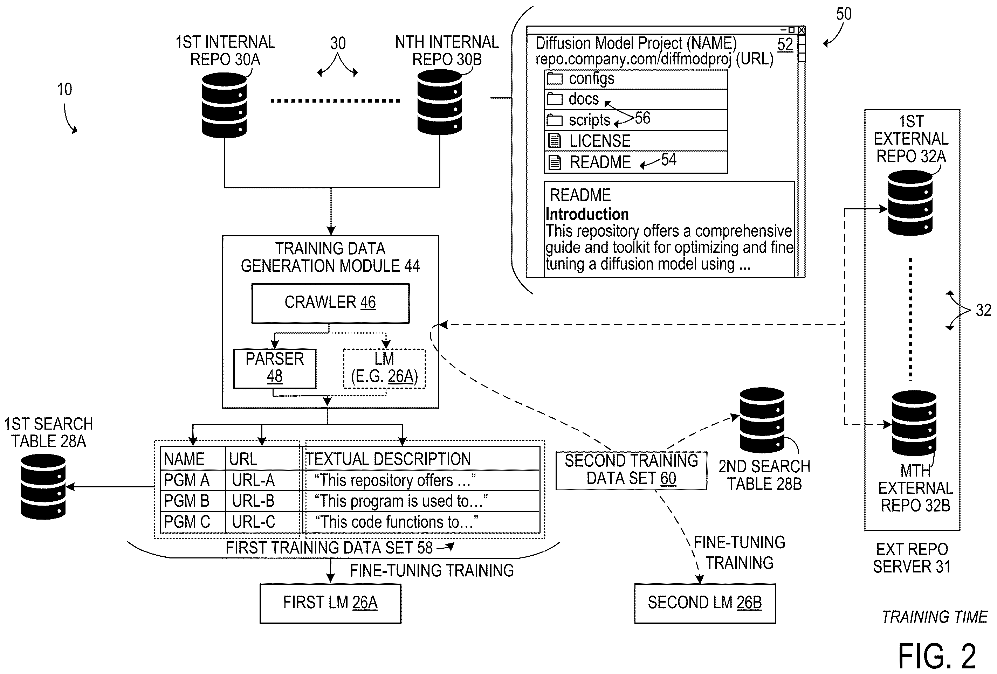

To address the issues discussed above, FIG. 1 illustrates a computing system 10 including a client device 12 and one or more servers of the computing system 10 collectively configured to implement a code search service 14. As depicted, computing system 10 includes a web server 16 configured to display a graphical user interface for the code search service 14 to the user of the client device 12. The computing system 10 further includes an application server 18 including an application-programming interface (API) 20 configured to receive requests from the web server 16, and a search resolver 22 and multiplexing module 24 executed by the application server 18 and configured to generate a search result for the search request by making calls to one or more language models 26, and resolving the results received from the language models 26 to URLs stored in search tables 28. The language models 26 have been trained on code data stored in code repositories, such as internal code repository 30 and external code repository 32, and the search tables 28 have been generated during the preparation of the training data set as explained further in reference to FIG. 2. The language models 26 are executed on language model servers 34, which are separately depicted as first language model server 34A and second language model server 34B but alternatively can be a common server.

The search tables 28 are hosted by a first database server 27. The computing system 10 also includes second and third database servers 33, 35 that are respectively configured to host a vulnerability database 34 and a health database 36. Communications among the various servers and client device of computing system 10 take place via computer networks 38 such as the Internet and one or more local area networks. Thus, the web server 16, application server 18, language model servers 34 and various database servers 27, 33, 35 can be co-located in the same data center, for example, or distributed among different locations.

The computing system 10 comprises at least one code repository 30, 32 storing a plurality of code projects each having a natural language description, code, and location. As shown, the code repository 30, 32 can be an internal code repository 30 hosted on an internal repository server 29 with access limited to authorized users of an organization, for example, or an external code repository 32 hosted on a publicly accessible external repository server 31, such as an open source code repository. In the depicted embodiment, a plurality of internal code repositories 30A, 30B and a plurality of external code repositories 32A, 32B are provisioned on one or more internal repository servers 29 and one or more external repository servers 31, respectively. In the depicted embodiment, the at least one code repository 30, 32 includes at least one external repository 32 storing code projects that are publicly available; and/or at least one internal repository 30 storing code projects that are restricted to authorized users of an organization. These repositories are typically stored on database servers with web interfaces and/or APIs for browsing their contents.

Search tables 28 include a first search table 28A including a list of the code projects available in the internal repositories 30 and/or a second search table 28B including a list of the code projects available in the external repositories 32. Each list is typically stored in a table, and each entry in the table has a name of the code project and a location, such as a network location, of the code project. The network location may be formatted as a URL with a path that leads to a representative web page (i.e., top or home page) for the code project in the repository. Other data associated with the code project may also be stored in the search table, such as programming language, software license type, or textual summary, for example. The first and second search tables 28A, 28B are generated and populated during formulation of the training data set used to train the first language model 26A and second language model 26B respectively, as discussed below. Thus, the computing system 10 includes processing circuitry configured to, for each of the plurality of code projects in the repositories 30, 32, determine the location and a name of the code project and store the location and the name in a search table 28, during training time or in a separate configuration stage prior to inference time.

At inference time, a prompt 40 from the user is entered into client device 12 and transmitted via the web server to the code search service. The prompt 40 includes a search query in textual, natural language format from the user, and includes a description of code that the user is searching for.

To answer the query contained in prompt 40, the computing system 10 includes at least one generative language model 26, as described above. The generative language model 26 may be a large language model such as GPT3.5, BLOOM, LLaMA, or GEMINI, for example. Alternatively, a small language model such as Qwen or Gemma can be utilized. In some examples, the generative language model 26 can be a multimodal model. As shown, the at least one generative language model 26 can include at least a first language model 26A associated with the at least one internal repository 30 and a second language model 26B associated with the at least one external repository 32.

### Training

As shown in FIG. 2, in a training stage referred to herein as training time, the first language model 26A is trained on the contents of the internal repository 30, while the second language model 26B is trained on the contents of external repository 32. The training process will now be described with respect to the first language model 26A. The first language model 26A, like the second language model 26B, is typically a pretrained language model such as GPT3.5. Pretraining trains the first language model 26A on a corpus of text, to thereby learn to predict words based on the frequencies of detected relative positions of the words in sequences within the corpus.

However, since pretraining alone does not generally provide a generative language model with sufficient information on code projects in internal repositories, the first language model 26A is trained on a training data set generated from information on one or a plurality of internal repositories 30. To accomplish this, a training data generation module 44 can be executed on the first language model server 34A.

The training data generation module includes a crawler 46 that is configured to crawl data in each of the internal repositories 30, and extract, using a parser 48 or language model (which can be the first language model 26A, second language model 26B, or another language model) for example, a name, location (e.g., URL), and a textual description of the code for each code project in the repository. Each code project 50 includes a respective code project landing page 52 located at a URL or other file path or address within the repository. Various textual metadata may be stored on the landing page, as well as in other files 54 accessible in subdirectories 56 or at linked locations from the landing page 52. In one embodiment, an open source application like RepoToText (available on GitHub) may be used to collect file information and convert the information into a format that the code search service 14 can process as natural language description training data about code projects 50 in the repository 30. While the code project 50 is illustrated as being included within internal repository 30, it will be appreciated that code projects 50 are also included within external repository 32.

The parser 48, it will be appreciated, is configured to extract an exact textual description, exact URL, and exact code name extracted from the code project page in the repository. The language model 26A, 26B used by the training data generation module 44, on the other hand, can be configured via suitable prompting to extract the exact name and URL, and generate a summary of the code project in a standard format as the textual description, for example.

The training generation module 44 is configured to output and store a first training data set 58 based on information on code projects stored in the internal repositories 30, and also to store first search table 28A containing the name and location (e.g., URL) of each code project in the internal code repositories 30 in the first search table 28A. In some configurations, if desired, other metadata associated with the code project can be included in the first search table, such as a textual description language, or license of the code project, as discussed above.

As indicated in dashed lines in FIG. 2, it will be appreciated that a similar training process is used to train the second language model 26B on the code projects in the external code repositories 32, to thereby generate a second training data set 60 including the name, location (e.g., URL), and textual description of the code project, and to generate the second search table 28B including the name, location (e.g., URL), and any other desired code project metadata.

The first and second training data sets 58, 60 having been generated in the above described manner, further training is conducted on the pretrained first and second language models 26A, 26B using the first and second training data sets 58, 60. This further training may be fine tuning, which adjust the weights of the entire model, or may be training of a Low Rank Adaptation LoRA model or other delta model configured to modify the output of the pretrained model. In the fine-tuning of the model or the training of a LoRA or delta model, the model is further trained on next word prediction of the textual descriptions of each code project. In some cases, the URL and name of the code project are appended to the textual description in a preformatted manner, for example, "This code project is named <NAME> and is located at <URL>, and is described as follows: <Textual Description>." The language model is then trained on next word prediction of these descriptions of the code projects.

### Inference

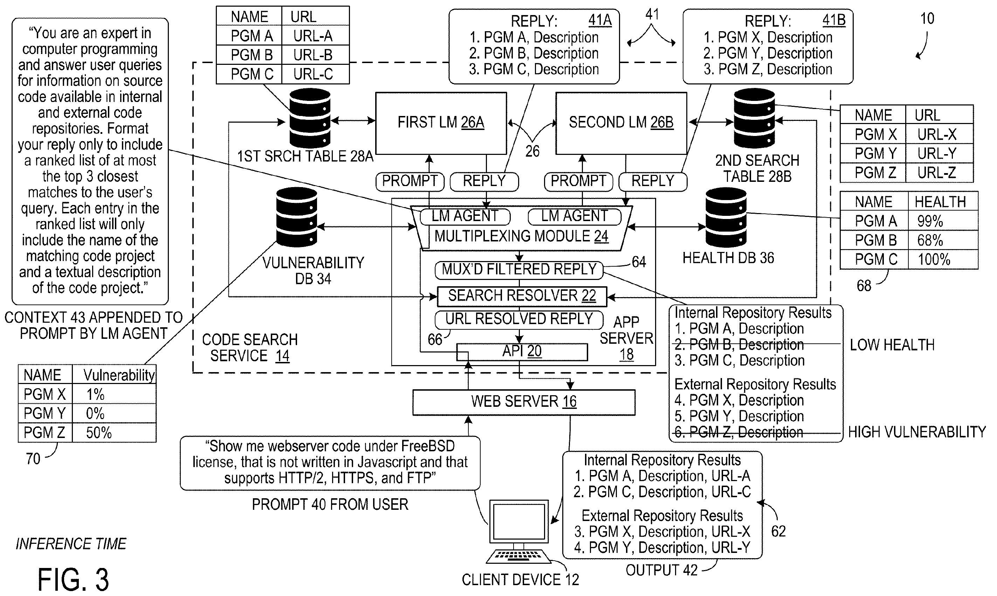

As shown in FIG. 3, at inference time the processing circuitry of the one or more servers hosting the code search service 14 is configured to receive a prompt 40 from a client device 12 of a user, the prompt 40 being a natural language query from a user requesting a list of matching code projects from a plurality of code projects stored in the repositories 30, 32. In the illustrated example the prompt 40 contains the example user query "Show me webserver projects under FreeBSD license, that are not written in JavaScript and that support HTTP/2, HTTPS, and FTP."

The processing circuitry is further configured to generate, via at least one generative language model 26 trained on the natural language descriptions of the plurality of code projects, and in response to the prompt 40, an output 42 including the list 62 of matching code projects; and return the output 42 to the client device 12 of the user. For example, the processing circuitry to accomplish these functions can be contained in the client device 12, web server 16, application server 18, and model servers 34, and database servers of the computing system 10.

The process of processing the prompt 40 to generate the output 42 will now be described. The prompt 40 is received at web server 16 and passed to API 20 where it is received at the application server 18. The prompt 40 is then passed directly to the multiplexing module 24. The multiplexing module 24 is configured to implement a language model agent for each of the first and second language models 26A, 26B. The language model agent for the first language model 26A is shown inserting context 43 into the prompt to further guide generation by the first language model 26A. The example context 43 is as follows: "You are an expert in computer programming and answer user queries for information on source code available in internal and external code repositories. Format your reply only to include a ranked list of at most the top 3 closest matches to the user's query. Each entry in the ranked list will only include the name of the matching code project and a textual description of the code project." This context 43 is appended to the query of the user to form a modified prompt 40, which is in turn passed to the first language model 26A. The language model agent associated with the second language model acts similar by appending a similar context 43 to the prompt 40, and sending it to the second language model. Each of the first and second language models 26A, 26B, then generates a corresponding reply 41 based on its respective fine tuning. It will be appreciated that the reply 41A from the first language model 26A will contain results from the internal code repository 30 due to its fine tuning, while the reply 41B from the second language model 26B will contain results from the external code repository 32 due to its fine tuning, as shown. In the depicted example, the language models 26A, 26B will generate replies that indicate any code projects matching the query request for webserver code, under the FreeBSD license, not written in JavaScript, that supports HTTP/2, HTTPS, and FTP. Programs and A, B, C are returned in the first reply 41A, while Programs X, Y, and Z are returned in the second reply 41B.

At the application server 18, the processing circuitry is configured to execute a multiplexing module 24 to -receive partial results in the form of replies 41A, 41B from each of the at least one generative language model 26A, 26B; and combine and weight the partial results to generate the list of matching code projects in the output. The multiplexing module 24 is configured to weight the code projects 50 of the at least one internal repository 30 more than the code projects 50 of the at least one external repositories 32 in the list 62 of matching code projects. As a result, the ranking of the code projects in the list may list internal repository results first before external repository results, as shown in list 62. This may be accomplished by, for example, the multiplexing module 24 applying a location weighting factor that is higher for code projects of the at least one internal repository 30 than for code projects of the at least one external repository 32.

In the illustrated example, the location of each of the plurality of code projects is a uniform resource locator (URL). Alternatively, the location may be a database address, a file path without a network address, Internet Protocol (IP) Address, persistent uniform resource locator (PURL), or other location.

The computing system 10 may further comprise a vulnerability database 34 configured to store information regarding security weaknesses of associated code projects 50. The processing circuitry of the application server 18, executing the multiplexing module 24, can be configured to weight the code projects 50 on the basis of the information regarding security weaknesses. This may be accomplished by application of a vulnerability weighting factor stored in the vulnerability database 34 for a code project 50.

The prompt 40 can include an exclusionary element that excludes a subset of code packages from the output 42, and the processing circuitry is configured to weight the code projects on the basis of the exclusionary element. Alternatively, the code projects may be filtered out of the list based on the exclusionary element. In the illustrated example, the exclusionary elements is "that is not written in JavaScript". Similarly, the prompt 40 can include license information such as "under FreeBSD" in this example, and the language model can be configured to generate a reply including matches that take into account this term, or the search table can be searched by the search resolver to identify matching projects in the search table that include the appropriate license, in the case that license information is contained in the search table 28A, 28B.

The computing system 10 can further comprise a health database 36 configured to store community health statistics of associated code projects. The community health statistics can include at least one of popularity, usage, and last update of the associated code projects or other metadata indicating health of the code project 50. Favorable scores on these statistics can indicate code that is not associated with known errors, recently updated, and frequently used. The processing circuitry of the application server 18 is configured to weight the code projects 50 on the basis of the community health statistics.

The multiplexing agent is configured to combine the partial results in the replies 41A and 41B, and filter, weight, and rank the results in a multiplexed filtered reply 64. In the illustrated example, the multiplexed filtered reply 64 includes internal repository results, from which Program B (originally included in reply 41A) has been filtered out due to a low health score indicated in community health statistics 68 from heath database 36. Similarly, Program Z (originally included in reply 41B) has been filtered out of multiplexed filtered reply 64 due to a high vulnerability score indicated by the vulnerability table 70 in vulnerability database 34.

Following the generation of the combined partial results in the multiplexed filtered reply 64, the search resolver 22 searches the first and second search tables 28A and 28B for matching entries for code projects 50 indicated in the multiplexed filtered reply 64 using the name and description information contained therein, and the name and URL information contained in the first and second search tables 28A, 28B, as well as any other information stored in the tables. A variety of matching algorithms can be used. For example, the matching algorithm can be an exact match for the name, a deterministic match using techniques such as regular expression matching, a vector representation match using vector representations of the name and description in the multiplexed filtered reply 64 and the name and other information in the search tables. Once the search resolver 22 finds a match, the URL associated with the code project in the first and/or second search tables 28A, 28B is appended to the results in the multiplexed filtered reply, to thereby generate output 42 including a list of the code projects, and the name, description, and the URL for each code project 50. Alternatively, a location indicator such as a network address, file path, database location, etc. can be used instead of URL in in the search tables 28A, 28B and output 42.

The output 42 can be in a variety of formats, and can further include a textual summary of each of the matching code projects. As shown, the output 42 can include the name and location, such as the URL, at which the code may be accessed. This output is returned to the client device 12 of the user.

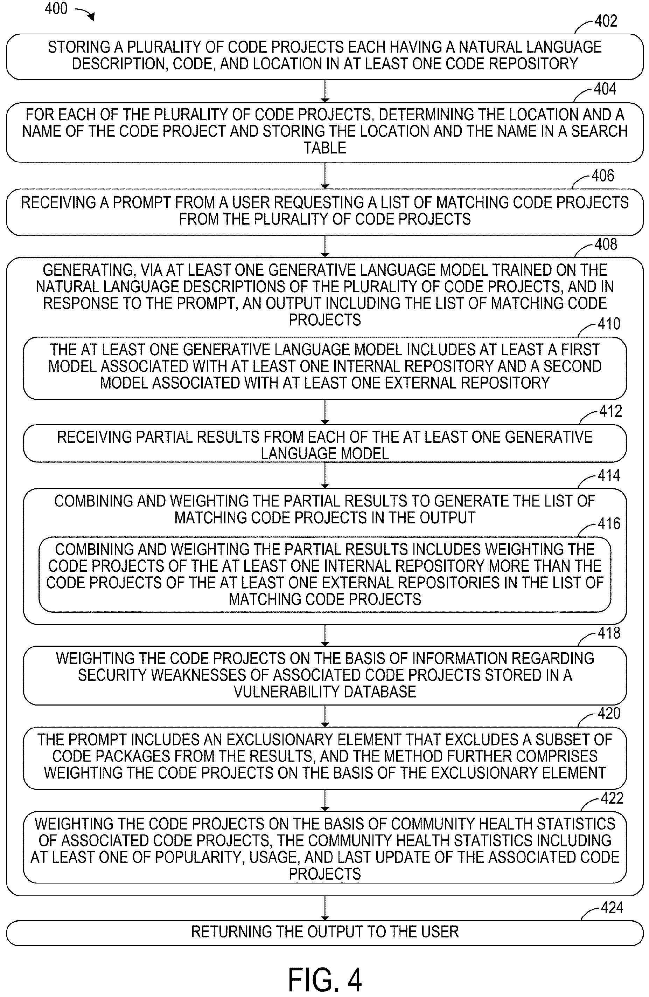

Turning now to FIG. 4, a flow chart of a method 400 for cataloging software code according to one implementation of the present disclosure is shown. The method 400 can be implemented using the hardware and software components of computing system 10 described above, or using other suitable hardware and software.

Method 400 includes, at 402, storing a plurality of code projects each having a natural language description, code project, and location in at least one code repository. As described above, the location of each of the plurality of code projects can be a uniform resource locator (URL).

At 404, the method 400 includes for each of the plurality of code projects, determining the location and a name of the code project and storing the location and the name in a search table. At 406, the method 400 includes receiving a prompt from a user requesting a list of matching code projects from the plurality of code projects. At 408, the method 400 includes generating, via at least one generative language model trained on the natural language descriptions of the plurality of code projects, and in response to the prompt, an output including the list of matching code projects.

The at least one code repository can include at least one external repository storing code projects that are publicly available; and at least one internal repository storing code projects that are restricted to authorized users of an organization. As shown at 410, the at least one generative language model can include at least a first model associated with the at least one internal repository and a second model associated with the at least one external repository.

At 412, the method 400 further includes receiving partial results from each of the at least one generative language model. At 414, the method 400 further includes combining and weighting the partial results to generate the list of matching code projects in the output. As shown at 416, the combining and weighting of the partial results can include weighting the code projects of the at least one internal repository more than the code projects of the at least one external repositories in the list of matching code projects.

At 418, the method 400 may include weighting the code projects on the basis of information regarding security weaknesses of associated code projects stored in a vulnerability database.

As shown at 420, the prompt can include an exclusionary element that excludes a subset of code packages from the results, and the method can further include weighting the code projects on the basis of the exclusionary element.

At 422, the method 400 can further include weighting the code projects on the basis of community health statistics of associated code projects, the community health statistics including at least one of popularity, usage, and last update of the associated code projects.

At 424, the method 400 includes returning the output to the client device of the user.

According to another aspect, a method for training at least two generative language models for cataloging software code is provided, the at least two generative language models having been pretrained on a natural language corpus. The method in this aspect includes storing a plurality of code projects each having a natural language description, code project, and location in at least two code repositories, including at least one external repository storing code projects that are publicly available; and at least one internal repository storing code projects that are restricted to authorized users of an organization. The method in this aspect further includes, via a crawler, for each of the plurality of code projects, determining the location and a name of the code project in each of the internal repository and external repository and storing the location and the name for code projects in the internal repository in a first search table and storing the location and name for code projects in the external repository in a second search table. The method in this aspect further includes, via a parser and/or one of the language models, generating first training data including at least a name and a textual description of each code project in the internal repository and generating second training data including a name and a textual description of each code project in the external repository. The method further includes performing fine tuning of the first language model using the first training data, and performing fine tuning of the second language model using the second training data.

The method in this aspect further includes providing a multiplexing module configured combine partial results from a first reply from the first language model and a second reply from the second language model to generate a multiplexed reply including a list of code projects from the internal repository and external repository, the list including a name and description of each code project. The method in this aspect further includes providing a search resolver configured to resolve the location of code projects in the list from the internal repository using the first search table and to resolve the location of code projects from the external repository using the second search table, to thereby generate an output including the resolved location for each code project.

The above described systems and methods can be used to address a technical challenge associated with making code projects stored in various internal and external code repositories searchable in a unified search tool that operates based on natural language queries, while ensuring that the names and locations of the code projects returned in the search results are not hallucinated or otherwise rendered inaccurately. In this manner, a user can reliably search for and find relevant code projects in both internal and external repositories using natural language prompts, and navigate to the code projects with surety, without worrying about broken or hallucinated links, etc.

In some embodiments, the methods and processes described herein may be tied to a computing system of one or more computing devices. In particular, such methods and processes may be implemented as a computer-application program or service, an application-programming interface (API), a library, and/or other computer-program product.

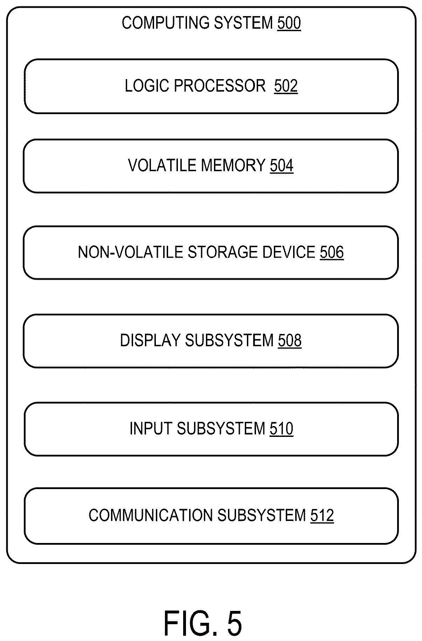

FIG. 5 schematically shows a non-limiting embodiment of a computing system 500 that can enact one or more of the methods and processes described above. Computing system 500 is shown in simplified form. Computing system 500 may embody various devices of the computing system 10 described above and illustrated in FIG. 1. Components of computing system 500 may be included in one or more personal computers, server computers, tablet computers, network computing devices, mobile computing devices, mobile communication devices (e.g., smartphone), and/or other computing devices.

Computing system 500 includes a logic processor 502, a volatile memory 504, and a non-volatile storage device 506. Computing system 500 may optionally include a display subsystem 508, input subsystem 510, communication subsystem 512, and/or other components not shown in FIG. 5.

Logic processor 502 includes one or more physical devices configured to execute instructions. For example, the logic processor 502 may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result. The logic processor 502 may include one or more physical processors configured to execute software instructions. Additionally or alternatively, the logic processor 502 may include one or more hardware logic circuits or firmware devices configured to execute hardware-implemented logic or firmware instructions. Processors of the logic processor 502 may be single-core or multi-core, and the instructions executed thereon may be configured for sequential, parallel, and/or distributed processing. Individual components of the logic processor 502 optionally may be distributed among two or more separate devices, which may be remotely located and/or configured for coordinated processing. Aspects of the logic processor 502 may be virtualized and executed by remotely accessible, networked computing devices configured in a cloud-computing configuration. In such a case, these virtualized aspects are run on different physical logic processors of various different machines, it will be understood.

Non-volatile storage device 506 includes one or more physical devices configured to hold instructions executable by the logic processors to implement the methods and processes described herein. When such methods and processes are implemented, the state of non-volatile storage device 506 may be transformed-e.g., to hold different data.

Non-volatile storage device 506 may include physical devices that are removable and/or built in. Non-volatile storage device 506 may include optical memory, semiconductor memory, and/or magnetic memory, or other mass storage device technology. Non-volatile storage device 506 may include nonvolatile, dynamic, static, read/write, read-only, sequential-access, location-addressable, file-addressable, and/or content-addressable devices. It will be appreciated that non-volatile storage device 506 is configured to hold instructions even when power is cut to the non-volatile storage device 506.

Volatile memory 504 may include physical devices that include random access memory. Volatile memory 504 is typically utilized by logic processor 502 to temporarily store information during processing of software instructions. It will be appreciated that volatile memory 504 typically does not continue to store instructions when power is cut to the volatile memory 504.

Aspects of logic processor 502, volatile memory 504, and non-volatile storage device 506 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 500 typically implemented in software by a processor to perform a particular function using portions of volatile memory, which function involves transformative processing that specially configures the processor to perform the function. Thus, a module, program, or engine may be instantiated via logic processor 502 executing instructions held by non-volatile storage device 506, using portions of volatile memory 504. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc.

When included, display subsystem 508 may be used to present a visual representation of data held by non-volatile storage device 506. The visual representation may take the form of a graphical user interface (GUI). As the herein described methods and processes change the data held by the non-volatile storage device 506, and thus transform the state of the non-volatile storage device 506, the state of display subsystem 508 may likewise be transformed to visually represent changes in the underlying data. Display subsystem 508 may include one or more display devices utilizing virtually any type of technology. Such display devices may be combined with logic processor 502, volatile memory 504, and/or non-volatile storage device 506 in a shared enclosure, or such display devices may be peripheral display devices.

When included, input subsystem 510 may comprise or interface with one or more user-input devices such as a keyboard, mouse, touch screen, camera, or microphone.

When included, communication subsystem 512 may be configured to communicatively couple various computing devices described herein with each other, and with other devices. Communication subsystem 512 may include wired and/or wireless communication devices compatible with one or more different communication protocols. As non-limiting examples, the communication subsystem 512 may be configured for communication via a wired or wireless local- or wide-area network, broadband cellular network, etc. In some embodiments, the communication subsystem 512 may allow computing system 500 to send and/or receive messages to and/or from other devices via a network such as the Internet.

The following paragraphs provide additional support for the claims of the subject application. One aspect provides a computing system for cataloging software code. The computing system comprises at least one code repository storing a plurality of code projects each having a natural language description, code, and location; and processing circuitry configured to, for each of the plurality of code projects, determine the location and a name of the code project and store the location and the name in a search table; receive a prompt from a user requesting a list of matching code projects from the plurality of code projects; generate, via at least one generative language model trained on the natural language descriptions of the plurality of code projects, and in response to the prompt, an output including the list of matching code projects; and return the output to the user. In this aspect, additionally or alternatively, the at least one code repository includes at least one external repository storing code projects that are publicly available; and at least one internal repository storing code projects that are restricted to authorized users of an organization. In this aspect, additionally or alternatively, the at least one generative language model includes at least a first model associated with the at least one internal repository and a second model associated with the at least one external repository. In this aspect, additionally or alternatively, the processing circuitry is configured to execute a multiplexing module to receive partial results from each of the at least one generative language model; and combine and weight the partial results to generate the list of matching code projects in the output. In this aspect, additionally or alternatively, the multiplexing module is configured to weight the code projects of the at least one internal repository more than the code projects of the at least one external repositories in the list of matching code projects. In this aspect, additionally or alternatively, the location of each of the plurality of code projects is a uniform resource locator (URL). In this aspect, additionally or alternatively, the computing system further comprises a vulnerability database configured to store information regarding security weaknesses of associated code projects, wherein the processing circuitry is configured to weight the code projects on the basis of the information regarding security weaknesses. In this aspect, additionally or alternatively, the prompt includes an exclusionary element that excludes a subset of code packages from the results, and the processing circuitry is configured to weight the code projects on the basis of the exclusionary element. In this aspect, additionally or alternatively, the computing system further comprises a health database configured to store community health statistics of associated code projects, wherein the community health statistics include at least one of popularity, usage, and last update of the associated code projects, and the processing circuitry is configured to weight the code projects on the basis of the community health statistics. In this aspect, additionally or alternatively, the output further includes a textual summary of each of the matching code projects.

Another aspect provides a method for cataloging software code. The method comprises storing a plurality of code projects each having a natural language description, code, and location in at least one code repository; for each of the plurality of code projects, determining the location and a name of the code project and storing the location and the name in a search table; receiving a prompt from a user requesting a list of matching code projects from the plurality of code projects; generating, via at least one generative language model trained on the natural language descriptions of the plurality of code projects, and in response to the prompt, an output including the list of matching code projects; and returning the output to the user. In this aspect, additionally or alternatively, the at least one code repository includes at least one external repository storing code projects that are publicly available; and at least one internal repository storing code projects that are restricted to authorized users of an organization. In this aspect, additionally or alternatively, the at least one generative language model includes at least a first model associated with the at least one internal repository and a second model associated with the at least one external repository. In this aspect, additionally or alternatively, the method further comprises, at a multiplexing module, receiving partial results from each of the at least one generative language model; and combining and weighting the partial results to generate the list of matching code projects in the output. In this aspect, additionally or alternatively, combining and weighting the partial results includes weighting the code projects of the at least one internal repository more than the code projects of the at least one external repositories in the list of matching code projects. In this aspect, additionally or alternatively, the location of each of the plurality of code projects is a uniform resource locator (URL). In this aspect, additionally or alternatively, the method further comprises weighting the code projects on the basis of information regarding security weaknesses of associated code projects stored in a vulnerability database. In this aspect, additionally or alternatively, the prompt includes an exclusionary element that excludes a subset of code packages from the results, and the method further comprises weighting the code projects on the basis of the exclusionary element. In this aspect, additionally or alternatively, the method further comprises weighting the code projects on the basis of community health statistics of associated code projects, the community health statistics including at least one of popularity, usage, and last update of the associated code projects.

Another aspect provides a method for training at least a first and a second generative language models for cataloging software code, the at least first and second generative language models having been pretrained on a natural language corpus. The method comprises storing a plurality of code projects each having a natural language description, code, and location in at least two code repositories, including at least one external repository storing code projects that are publicly available; and at least one internal repository storing code projects that are restricted to authorized users of an organization; via a crawler, for each of the plurality of code projects, determining the location and a name of the code project in each of the internal repository and external repository and storing the location and the name for code projects in the internal repository in a first search table and storing the location and name for code projects in the external repository in a second search table; and via a parser and/or the first or second generative language models, generating first training data including at least a name and a textual description of each code project in the internal repository and generating second training data including a name and a textual description of each code project in the external repository; performing fine tuning of the first generative language model using the first training data; performing fine tuning of the second generative language model using the second training data; providing a multiplexing module configured combine partial results from a first reply from the first generative language model and a second reply from the second generative language model to generate a multiplexed reply including a list of code projects from the internal repository and external repository, the list including a name and description of each code project; and providing a search resolver configured to resolve the location of code projects in the list from the internal repository using the first search table and to resolve the location of code projects from the external repository using the second search table, to thereby generate an output including the resolved location for each code project.

"And/or" as used herein is defined as the inclusive or V, as specified by the following truth table:

| A | B | A V B |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A computing system (10) for cataloging software code, the computing system (10) comprising:
at least one code repository (30, 32) storing a plurality of code projects (50) each having a natural language description, code, and location; and
processing circuitry (502) configured to:
for each of the plurality of code projects (50), determine the location and a name of the code project (50) and store the location and the name in a search table (28);
receive a prompt (40) from a user requesting a list (62) of matching code projects (50) from the plurality of code projects (50);
generate, via at least one generative language model (26) trained on the natural language descriptions of the plurality of code projects (50), and in response to the prompt (40), an output (42) including the list (62) of matching code projects (50); and
return the output (42) to the user.

2. The computing system (10) of claim 1, wherein the at least one code repository (30, 32) includes:
at least one external repository (32) storing code projects (50) that are publicly available; and
at least one internal repository (30) storing code projects (50) that are restricted to authorized users of an organization.

3. The computing system (10) of claim 2, wherein the at least one generative language model (26) includes at least a first model (26A) associated with the at least one internal repository (30) and a second model (26B) associated with the at least one external repository (32).

4. The computing system (10) of claim 3, wherein the processing circuitry (502) is configured to execute a multiplexing module (24) to:
receive partial results (41A, 41B) from the first model (26A) and the second model (26B); and
combine and weight the partial results (41A, 41B) to generate the list (62) of matching code projects (50) in the output (42).

5. The computing system (10) of claim 4, wherein the multiplexing module (24) is configured to weight the code projects (50) of the at least one internal repository (30) more than the code projects (50) of the at least one external repositories in the list (62) of matching code projects (50).

6. The computing system (10) of any one of the preceding claims, wherein the location of each of the plurality of code projects (50) is a uniform resource locator, URL.

7. The computing system (10) of any one of the preceding claims, further comprising a vulnerability database (34) configured to store information regarding security weaknesses of associated code projects (50), wherein the processing circuitry (502) is configured to weight the code projects (50) on the basis of the information regarding security weaknesses.

8. The computing system (10) of any one of the preceding claims, wherein the prompt (40) includes an exclusionary element that excludes a subset of code packages from the output (42), and the processing circuitry (502) is configured to weight the code projects (50) on the basis of the exclusionary element.

9. The computing system (10) of any one of the preceding claims, further comprising a health database (36) configured to store community health statistics of associated code projects (50), wherein
the community health statistics include at least one of popularity, usage, and last update of the associated code projects (50), and
the processing circuitry (502) is configured to weight the code projects (50) on the basis of the community health statistics.

10. The computing system (10) of any one of the preceding claims, wherein the output (42) further includes a textual summary of each of the matching code projects (50).

11. A method (400) for cataloging software code, method (400) comprising:
storing (402) a plurality of code projects each having a natural language description, code, and location in at least one code repository;
for each of the plurality of code projects, determining (404) the location and a name of the code project and storing the location and the name in a search table;
receiving (406) a prompt from a user requesting a list of matching code projects from the plurality of code projects;
generating (408), via at least one generative language model trained on the natural language descriptions of the plurality of code projects, and in response to the prompt, an output including the list of matching code projects; and
returning (424) the output to the user.

12. The method (400) of claim 11, wherein the at least one code repository includes at least one external repository storing code projects that are publicly available, and at least one internal repository storing code projects that are restricted to authorized users of an organization, the at least one generative language model includes (410) at least a first model associated with the at least one internal repository and a second model associated with the at least one external repository, said method (400) further comprising, at a multiplexing module:
receiving (412) partial results from the first model and the second model; and
combining and weighting (414) the partial results to generate the list of matching code projects in the output.

13. The method (400) of claim 12, wherein combining and weighting the partial results includes weighting (416) the code projects of the at least one internal repository more than the code projects of the at least one external repositories in the list of matching code projects.

14. The method (400) of any one of claims 11 to 13, further comprising weighting (418) the code projects on the basis of information regarding security weaknesses of associated code projects stored in a vulnerability database.

15. A method for training at least a first and a second generative language models (26A, 26B) for cataloging software code, the first and second generative language models (26A, 26B) having been pretrained on a natural language corpus, the method comprising:
storing a plurality of code projects (50) each having a natural language description, code, and location in at least two code repositories, said code repositories including:
at least one external repository (32) storing code projects (50) that are publicly available; and
at least one internal repository (30) storing code projects (50) that are restricted to authorized users of an organization;
via a crawler (46), for each of the plurality of code projects (50), determining the location and a name of the code project (50) in the at least one internal repository (30) and in the at least one external repository (32) and storing the location and the name for code projects (50) in the at least one internal repository (30) in a first search table (28A) and storing the location and name for code projects (50) in the the at least one external repository (32) in a second search table (28B); and
via a parser (48) and/or one the generative language models (26A, 26B), generating first training data (58) including at least a name and a textual description of each code project (50) in the at least one internal repository (30) and generating second training data (60) including a name and a textual description of each code project (50) in the at least one external repository (32);
performing fine tuning of the first generative language model (26A) using the first training data (58);
performing fine tuning of the second generative language model (26B) using the second training data (60);
providing a multiplexing module (24) configured to combine partial results from a first reply (41A) from the first generative language model (26A) and a second reply (42B) from the second generative language model (26B) to generate a multiplexed reply including a list (62) of code projects (50) from the at least one internal repository (30) and the at least one external repository (32), the list (62) including a name and description of each code project (50); and
providing a search resolver (22) configured to resolve the location of code projects (50) in the list (62) from the at least one internal repository (30) using the first search table (28) and to resolve the location of code projects (50) from the at least one external repository (32) using the second search table (28), to thereby generate an output (42) including the resolved location for each code project (50).
